# EUROPÄISCHE PATENTSCHRIFT

(11) **EP 1 112 880 B1**
(45) Veröffentlichungstag und Bekanntmachung des Hinweises auf die Patenterteilung: **15.03.2006**
(21) Anmeldenummer: 00124880.6
(22) Anmeldetag: 15.11.2000
(51) Int. Cl.: B60J 7/185

(54) **Schliessvorrichtung für ein Verdeck eines Cabriolet-Fahrzeuges**
Locking device for a convertible vehicle foldable top
Dispositif de verrouillage pour capote de véhicule convertible

(30) Priorität: 31.12.1999 DE 29923089 U
(43) Veröffentlichungstag der Anmeldung: 04.07.2001
(73) Patentinhaber: Wilhelm Karmann GmbH, 49084 Osnabrück (DE)
(72) Erfinder: Deadrick, Frank, Beverly Hills, MI 48025 (US); Geyer, Frank Marius, Southfield, MI 48034 (US); Jumaah, Khais, Dearborn HTS., MI 48127 (US); Smith, Brad, Fenton, MI 48430 (US)
(74) Vertreter: Busse & Busse Patentanwälte

(56) Entgegenhaltungen:
- EP-A- 0 930 187
- GB-A- 989 694
- US-A- 2 993 731

## Beschreibung

Die Erfindung bezieht sich auf eine Schließvorrichtung für ein Verdeck eines Cabriolet-Fahrzeuges, gemäß dem Oberbegriff des Anspruchs 1. Die gattungsgemäße Vorrichtung der DE-U-9 203 285 zeigt dabei eine Verbindungsstange mit an jedem Ende befestingten U-Profilkörper, dessen einer Schenkel ortsfest am Dachspitzenteil gelagert ist.

Die Erfindung befaßt sich mit dem Problem, eine Schließvorrichtung für das Verdeck eines Cabriolet-Fahrzeuges der gemäß DE 92 032 85 Ul bekannten Art zu schaffen, bei der die Betätigungs- und Verriegelungsorgane mit einer geringen Anzahl von Einzelbauteilen funktionssicher geführt sind, in eine verminderte Beschädigungs- und Verletzungsgefahren für den Benutzer aufweisende Nichtgebrauchsstellung verlagerbar sind und eine Verbesserung des Bedienkomforts ermöglichen.

Die weitere EP-A-930 187 weist zwei separate Torsionsstangen auf, die in wirkverbindung mit einer Betätigungs einrichtung und den Verriegelungsorganen stehen.

Die Erfindung löst diese Aufgabe durch eine Schließvorrichtung mit den Merkmalen des Anspruchs 1. Hinsichtlich wesentlicher weiterer Ausgestaltungsmerkmale wird auf die Ansprüche 2 bis 15 verwiesen.

Mit dem zur Übertragung der Bedienbewegung des Schwenkgriffes vorgesehenen und in Längsrichtung eine Profilbiegung aufweisenden Torsionsstab ist die erfindungsgemäße Schließvorrichtung konstruktiv so verändert, daß der Schwenkgriff im Zusammenwirken mit den beiden endseitig am Torsionsstab vorgesehenen Stütz/Schwenkverbindungen zu dem Dachspitzenteil und zu den jeweiligen Riegelorganen hin eine kinematische Kette bildet, die nach Art einer Zwangssteuerung eine vom Benutzer unabhängige Bewegung ermöglicht. Ohne zusätzliche Handbewegungen werden nach einer Vorrichtungsbetätigung mittels des handbetätigten Schwenkgriffes dieser und die Verriegelungsorgane der Schließvorrichtung selbsttätig in eine Verwahrstellung verlagert. Danach sind aus der Dachebene herausbewegbare Bauteile in einer für den Benutzer weitgehend unzugänglichen Lage gesichert. Bei verbessertem Bedienkompfort sind damit Verletzungen durch unbeabsichtigten Kontakt an überstehenden Baugruppen der Schließvorrichtung vermieden.

Die Baugruppen dieser Zwangssteuerung für die Schließvorrichtung sind mit geringem technischem Aufwand in das Dachspitzenteil des Verdecks so integriert, daß mit wenigen zu montierenden Einzelteilen eine funktionssichere Öffungs- und Verschlußkinematik erreicht wird. Durch eine ungehinderte Zugänglichkeit der einfach aufgebauten Baugruppen ist bei Montage- oder Reperaturarbeiten im Bereich der Schließvorrichtung ein schneller Teileeinbau mit geringem Aufwand möglich und bei unterschiedlichen Toleranzmaßen, beispielsweise im Bereich zwischen den Riegelbaugruppen und dem Gegenlager am Windschutzscheibenrahmen, sind durch einfach einstellbare Teile aufwendige Anpassungen entbehrlich.

Hinsichtlich weiterer Einzelheiten und vorteilhafter Ausgestaltungen der erfindungsgemäßen Schließvorrichtung wird auf die nachfolgende Beschreibung und die Zeichnung verwiesen, in der ein Ausführungsbeispiel des Gegenstands der Erfindung schematisch näher veranschaulicht ist. In der Zeichnung zeigen:
- Fig. 1:: eine Ausschnittsdarstellung eines Teilbereiches einer Dachspitze mit einer in dieser vorgesehenen Schließvorrichtung für ein Verdeck eines nicht näher dargestellten Cabriolet-Fahrzeuges,
- Fig. 2 bis 6: eine jeweilige Schnittdarstellung der Schließvorrichtung im Bereich eines in der Fahrzeuglängsmittelebene abgestützten Schwenkgriffes, dessen Baugruppen jeweils unterschiedliche Bewegungsphasen aufweisen,
- Fig. 7: eine vergrößerte Ausschnittsdarstellung der Schließvorrichtung im Bereich eines der seitlichen Riegelorgane gemäß Fig. 1, und
- Fig. 9 bis 13: eine jeweilige Schnittdarstellung gemäß einer Linie III-III in Fig. 1 mit unterschiedlichen Bewegungsphasen im Bereich des Riegelorgans.

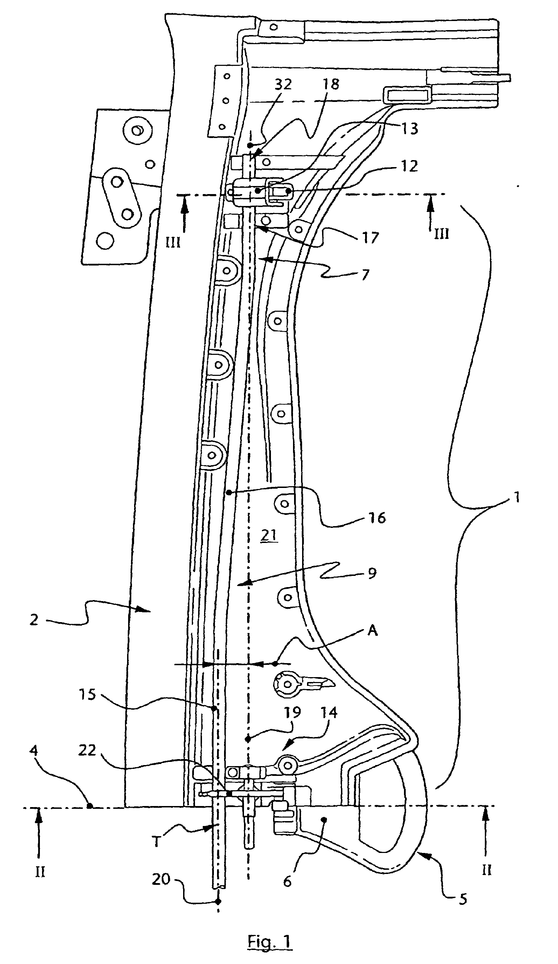

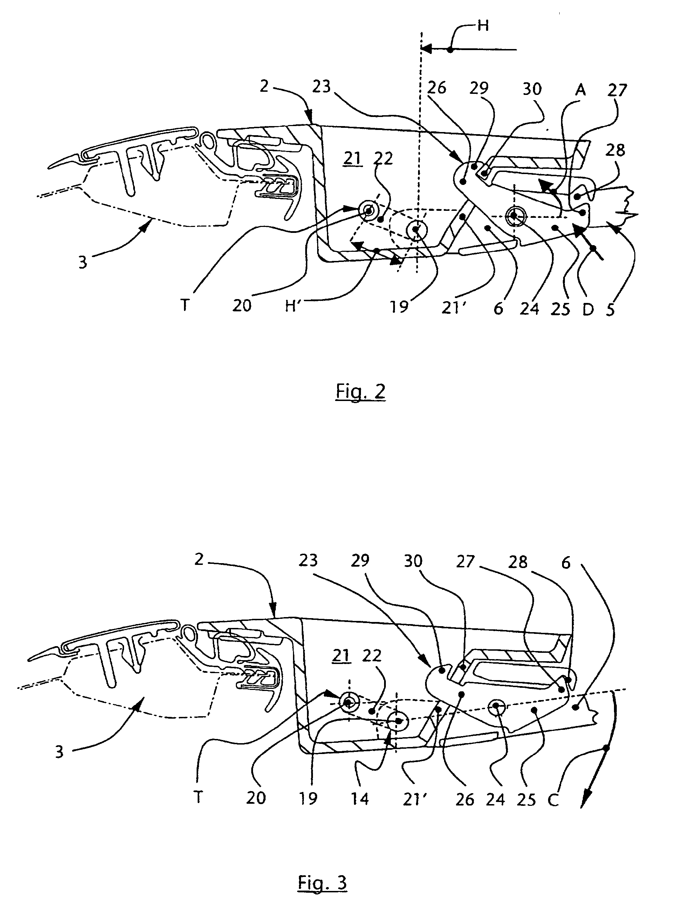

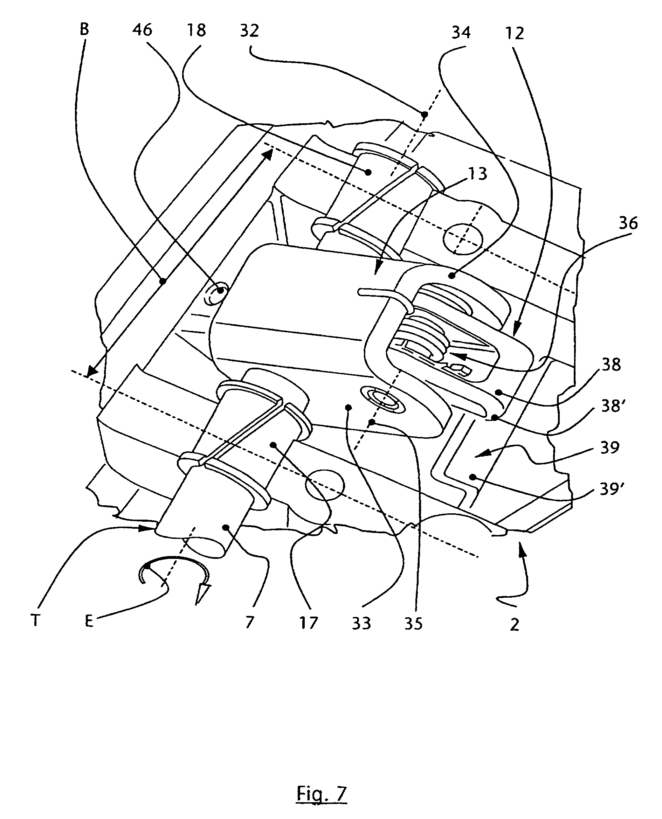

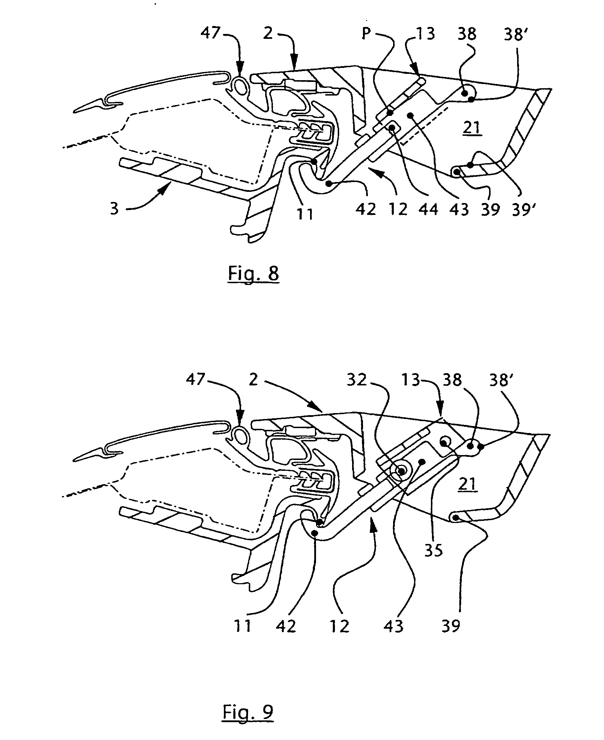

In Fig. 1 ist eine insgesamt mit 1 bezeichnete Schließvorrichtung im linken Teil einer Dachspitze 2 dargestellt, mittels der ein nicht näher dargestelltes Verdeck eines Cabriolet-Fahrzeuges im Bereich eines Windschutzscheibenrahmens 3 (Fig. 2) verriegelbar ist. Die Schließvorrichtung 1 ist mit einem am Dachspitzenteil 2 im Bereich der Fahrzeuglängsmittelebene 4 abgestütztem Einhand-Schwenkgriff 5 versehen. Dieser weist nahe seines Betätigungsbereiches 6 eine symmetrisch zur Fahrzeuglängsmittelebene 4 verlaufende Verbindungsstange 9 auf, mittels der eine durch eine Hanbewegung eines Nutzers erzeugte Schwenkbewegung (Pfeil C, Fig. 3) synchron zu deren Endteilen 7 (bzw. 8, nicht dargestellt) hin übertragen wird. Das jeweilige Endteil 7, 8 ist dabei mit einem in Schließstellung des Verdecks in ein Gegenlager 11 (Fig. 8) am Windschutzscheibenrahmen 3 eingreifenden Riegelorgan 12 versehen, das seinerseits schwenkbar von einem Haltekörper 13 (Fig. 7) geführt ist.

Bei der erfindungsgemäßen Schließvorrichtung 1 ist die Verbindungsstange als ein gemeinsam mit dem Schwenkgriff 5 um dessen Schwenklager 14 am Dachspitzenteil 2 verlagerbarer Torsionsstab T ausgebildet, dessen Endteil 7 (bzw. 8) jeweils im Bereich des Riegelorgans 12 ortsfest am Dachspitzenteil 2 gelagert ist. Der Torsionsstab T weist dabei ausgehend von seinem drehfest am Schwenkgriff 5 festgelegten Mittelteil 15 in Längsrichtung zu den Riegelorganen 12 hin jeweils einen Bogenprofilteil 16 auf, so daß mit diesem zwischen Mittelteil 15 und versetzt verlaufendem Endteil 7 ein in den Torsionsstab T integrierter Abstand A gebildet ist. Der Endteil 7 des Torsionsstabes T seinerseits ist zum Riegelorgan 12 hin ortsfest über ein äußeres und ein inneres Gleitlager 17, 18 abgestützt.

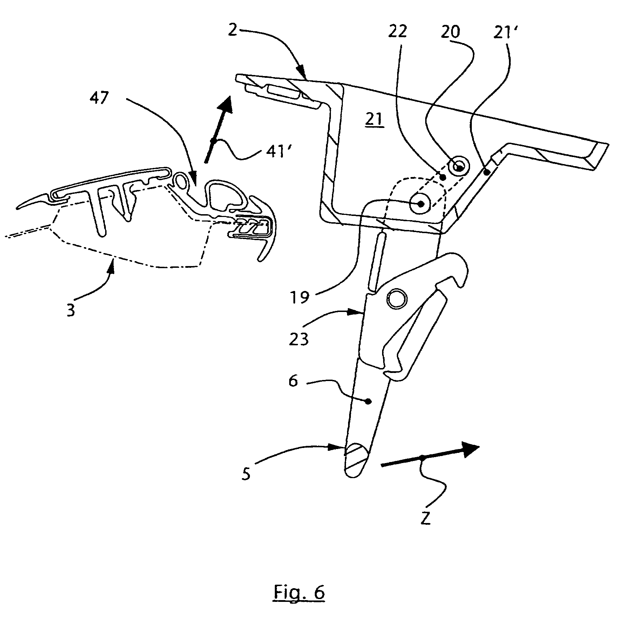

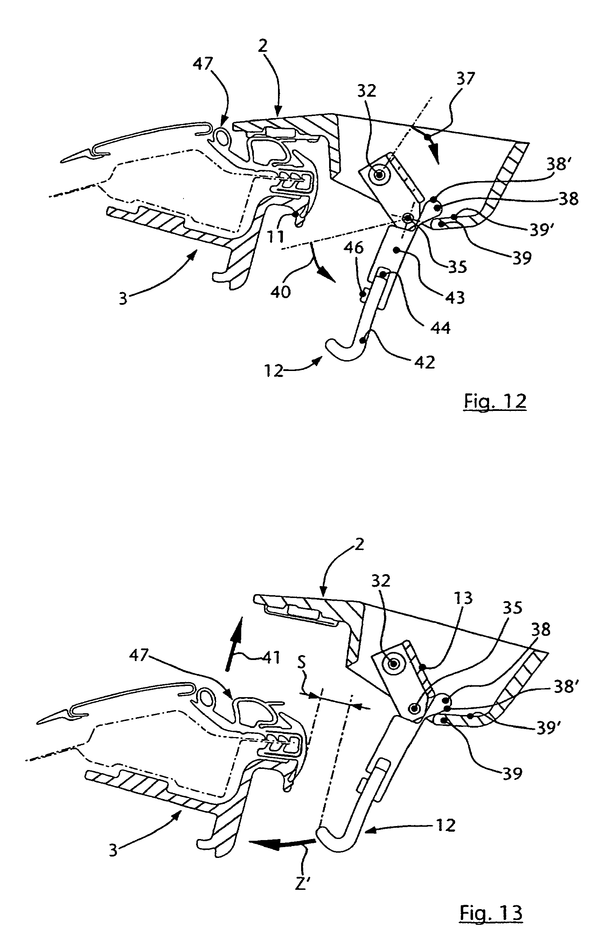

Durch diese Ausführung der kinematischen Kette innerhalb der Schließvorrichtung 1 mit dem einerseits durch Handbetätigung im Bereich des Schwenkgriffes 5 verlagerbaren und andererseits am Dachspitzenteil 2 das jeweilige Riegelorgan 12 schwenkbar erfassenden Torsionsstab ist erreicht, daß bei einer Verlagerung des Verdecks in die Offenstellung (Fig. 6) in der Schließvorrichtung 1 als Rückstellkräfte wirksame eleastische Spannungen erzeugt sind. Damit können nach Beendigung der Handbetätigung sowohl der mittlere Schwenkgriff 5 als auch das jeweilige Riegelorgan 12 im Bereich des Haltekörpers 13 selbsttätig in eine Verwahrstellung zum Dachspitzenteil 2 hin zurückgeführt werden (Pfeil Z, Fig. 6 bzw. Pfeil Z', Fig. 13), wobei diese beiden Baugruppen eine entgegengesetzte Schwenkrichtung aufweisen.

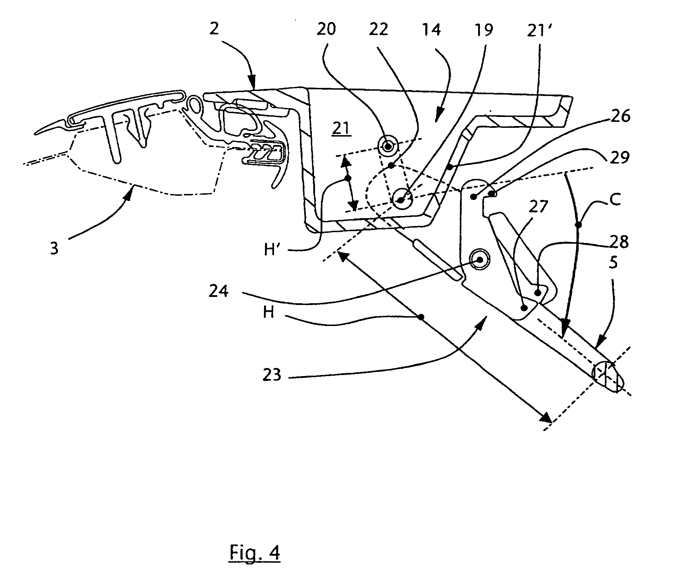

Die Draufsicht gemäß Fig. 1 zeigt, daß das Schwenklager 14 des Schwenkgriffes 5 eine in Schließstellung (Fig. 2) des Verdecks in Richtung der Fahrzeuglängsmittelebene 4 vor dem Betätigungsbereich 6 des Schwenkgriffes 5 liegende Schwenkachse 19 aufweist und parallel vor dieser der Torsionsstab T durch eine von deren Mittelteil 15 gebildete Verbindungsachse 20 mit dem Schwenkgriff 5 verbunden ist. Die Schwenkstellung gemäß Fig. 4 verdeutlicht in einer geschnittenen Seitenansicht, daß der Schwenkgriff 5 einen zu dessen Schwenkachse 19 hin verlaufenden ersten Hebelteil H definiert, der andererseits mit einem den Mittelteil 15 des Torsionsstabes T im Bereich der Verbindungsachse 20 erfassenden zweiten Hebelteil H' in Form einer Verbindungsstrebe 22 zusammenwirkt.

Das Hebelverhältnis H/H' kann ausgehend von der für die Verbindungsstrebe 22 (mit der Hebellänge H') im Dachteil 2 bzw. in einer Formrinne 21 verfügbaren Breite so gewählt werden, daß durch eine optimale Übersetzung mit der geringen Handkraft einer Bedienperson der Torsionswiderstand des Torsionsstabes T und der Reibwiderstand im Bereich der Gleitlager 17, 18 überwunden werden und eine problemlose Entriegelung möglich ist. Diese Verlagerung des Torsionsstabes T (Bewegungsfolge gemäß Fig. 3 bis Fig. 5) gemeinsam mit den Riegelorganen 12 ist von Hand auch von weniger geübten Bedienpersonen ausführbar, so daß das Dachspitzenteil 3 mit hohem Bedienkomfort einfach vom Windschutzscheibenrahmen 3 gelöst werden kann (Fig. 6, Fig. 13).

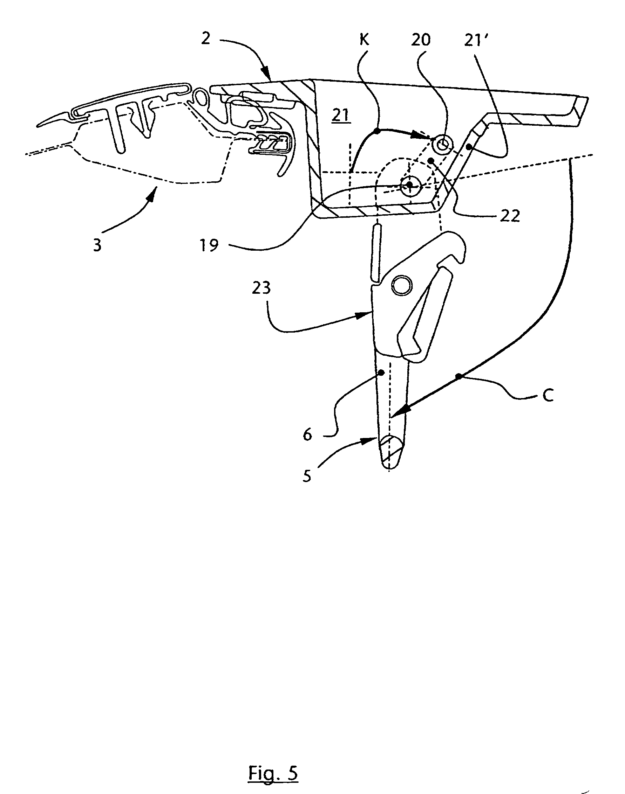

Die Verlagerung des Torsionsstabes T im Bereich seiner mittleren Verbindungsachse 20 erfolgt bei der Öffnungsbewegung mittels des Schwenkgriffes 5 auf einer oberhalb des Schwenklagers 14 bzw. der Schwenkachse 19 als Kreisbogen K verlaufenden Bewegungsbahn (Fig. 5). Bei dieser Schwenkbewegung wird der Torsionsstab T innerhalb der im Dachspitzenteil 2 vorgesehenen Formrinne 21 sowohl beim Öffnungs- als auch beim Schließvorgang frei verlagert.

In Fig. 2 ist der Schwenkgriff 5 in seiner Schließstellung dargestellt, wobei dieser eine verriegelbare Totpunktstellung aufweist. Für diese Verriegelung ist am Schwenkgriff 5 ein Verriegelungshaken 23 vorgesehen, der zu seiner Schwenkachse 24 im wesentlichen symmetrisch ausgebildet ist und einerseits einen Druckschenkel 25 und andererseits mit einen Hakenteil 26 aufweist. Bei Einleitung einer durch einen Pfeil D veranschaulichten Druckkraft auf den Druckschenkel 25, beispielsweise durch Daumendruck, wird der Verriegelungshaken 23 um die Schwenkachse 24 geschwenkt (Pfeil A), ein Spitzenteil 27 des Druckschenkels 25 in eine Rastkerbe 28 am Schwenkgriff 5 verlagert und gleichzeitig eine Rastnase 29 des Haktenteils 26 von einem Gegenlager 30 am Dachspitzenteil 2 gelöst (Fig. 3). Danach kann der Schwenkgriff 5 in die Öffnungsrichtung (Pfeil C) verlagert werden, wobei der Verriegelungshaken 23 durch eine Öffnung 21' aus dem Dachspitzenteil 2 herausbewegt wird. Der Verriegelungshaken 23 ist mit einer nicht dargestellten Rückholfeder am Schwenkgriff 5 abgestützt, so daß nach der Entriegelungsphase durch die Druckkraft D der Verriegelungshaken 23 selbsttätig aus der Rastkerbe 28 herausgeschwenkt und in der gemäß Fig. 4 dargestellten Lage verbleibt. Die Verriegelung erfolgt in umgekehrter Bewegungsfolge.

In dieser Öffnungsstellung (Fig. 5) des Schwenkgriffs 5 verbleibt die Hand der Bedienperson am Betätigungsbereich 6 des Schwenkgriffs und das Dachspitzenteil 2 kann insgesamt durch eine Hubbewegung (Pfeil 41') vom Windschutzscheibenrahmen 3 gelöst (Fig. 6) werden. Bei einer danach möglichen zwangsgesteuerten Rückführung (nicht dargestellt) mittels des Torsionsstabes T in die Stellung gemäß Fig. 2 erfolgt die vorbeschriebene Bauteilbewegung in umgekehrter Reihenfolge und der Verriegelungshaken 23 wird durch die Öffnung 21' in das Dachspitzenteil 2 eingeschwenkt.

In Fig. 7 ist die Abstützung des Torsionsstabes T im Bereich eines seiner Endteile 7 mit konstruktiven Einzelteilen dargestellt, wobei deutlich wird, daß das Endteil 7 mit den zwei im Abstand B angeordneten Gleitlagern 17, 18 zusammenwirkt und zwischen diesen der jeweilige Haltekörper 13 mit dem Riegelorgan 12 vorgesehen ist. Diese Perspektivdarstellung gemäß Fig. 7 verdeutlicht, daß der Haltekörper 13 jeweils als ein U-Profilteil ausgebildet ist, das im Bereich einer vom Endteil 7 des Torsionsstabes T definierten Querachse 32 (die ihrerseits zur Verbindungsachse 20 des Mittelteils 15 den Abstand A definiert) durch zwei parallele Schenkelteile 33, 34 zu den Gleitlagern 17, 18 hin abgestützt ist. Im Abstand zu dieser Querachse 32 verläuft zwischen den beiden Schenkelteilen 32 und 33 eine das Riegelorgan 12 abstützende Schwenkachse 35.

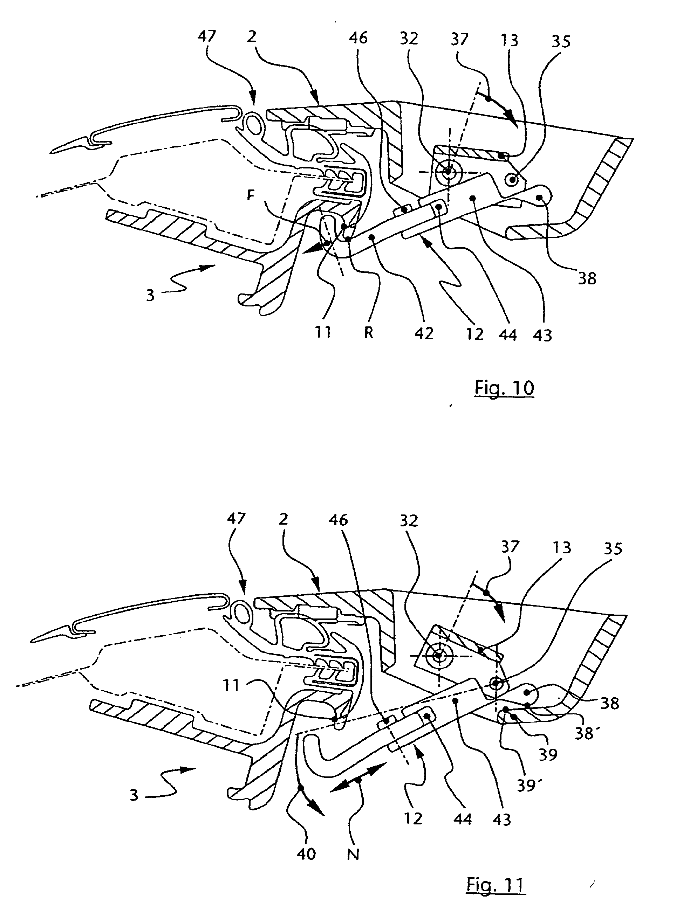

Im Bereich der Schwenkachse 35 ist das Riegelorgan 12 mit einer zwischen diesem und dem Haltekörper 13 verspannten Rückholfeder 36 versehen. Die Rückholfeder 36 hält das Riegelorgan 12 in dem U-förmigen Haltekörper 13 (Fig. 7). Bei der Öffnungs- bzw. Schließbewegung wirkt diese Rückholfeder 36 mit dem Torsionsstab T zusammen und bei Einleitung einer zu dessen Öffnungsbewegung C synchronen Drehbwegung E wird die Rückholfeder 36 im Schwenkbereich des Haltekörpers 13 (Pfeil 37) mit einer der Federkraft entgegenwirkenden Vorspannung beaufschlagt. Damit kann nach dem Öffnen die Rückstellung der Bauteile unterstützt werden, so daß die vorbeschriebenen Bewegungen gemäß Pfeil Z und Z' (Fig. 6 bzw. 13) funktionssicher in hoher Wiederholzahl ausführbar sind. In Fig. 10 bis 13 sind diese Bewegungsphasen im Bereich des Riegelorgans 12 in einer mit den Bewegungsphasen des Schwenkgriffes 5 gemäß Fig. 3 bis 6 synchroner Darstellung so veranschaulicht, daß mit diesen Bewegungsabläufen die Erzeugung der Vorspannungen sowohl im Torsionsstab T als auch und in der Rückholfeder 36 nachvollziehbar ist.

In der gemäß Fig. 8 dargestellten Schließstellung ist das Riegelorgan 12 einerseits am Windschutzscheibenrahmen 3 gehalten und andererseits bildet das Riegelorgan 12 mit dem Haltekörper 13 eine Totpunktstellung, wobei die beiden Bauteile in einem Bereich P aneinanderliegen und damit eine Fixierung erfahren. Bei Einleitung der Schwenkbewegung C im Bereich des Schwenkgriffes 5 wird der Haltekörper 13 aus der Totpunktstellung heraus bewegt (Fig. 9) und das Riegelorgan 12 verbleibt dabei noch am Windschutzscheibenrahmen 3 in seiner Schließstellung. Bei Fortsetzung des Öffnungsvorganges im Bereich des Schwenkgriffes 5 wird der Haltekörper 13 in seiner Schwenkrichtung 37 um die Querachse 32 geschwenkt, wobei das Riegelorgan 12 gleichzeitig aus der Schließstellung am Gegenlager 11 gelöst wird (Fig. 10). Dabei wird das Riegelorgan 12 vom Gegenlager 11 in einem Bereich R geführt, da die Schwenkbewegung 37 im Bereich des Haltekörpers 13 in dieser Öffnungsphase als Schubbewegung im Bereich des Riegelorgans 12 wirksam ist (Pfeil F, Fig. 10).

Die Fortsetzung der Schwenkbewegung im Bereich des Schwenkgriffes 5 führt zu den in Fig. 11 bis 13 dargestellten Schwenkstellungen des Riegelorgans 12, an dem in erfindungsgemäßer Ausführung ein rückwärtiger Stützansatz 38 vorgesehen ist, der nunmehr an einem Gegenlager 39 des Dachspitzenteils 2 in Anlagestellung gelangt. Mit dieser Anlage der Bauteile kann die vorbeschriebene Vorspannung der Rückholfeder 36 eingeleitet werden, wobei nunmehr eine Schwenkbewegung (Pfeil 40) entgegen deren Federkraft erfolgt und das Riegelorgan 12 entgegen der Bewegung (Pfeil 37) des Haltekörpers 13 (Fig. 11) verlagert wird. Dabei wird das Riegelorgan 12 um die Schwenkachse 35 bewegt (Fig. 12) und aus dem Bereich des Gegenlagers 11 am Windschutzscheibenrahmen 3 herausgeführt. Gleichzeitig erfolgt mittels des Stützansatzes 38 eine Führung der Bewegung des Riegelorgans 12 nach Art einer Kulissenführung. Eine Radienkontur 38' des Stützansatzes 38 rollt dabei auf einer Ebene 39' des Gegenlagers 39 so, wobei eine kraftschlüssige Zwangsführung der Baugruppen erreicht ist und dabei die Schwenkachse 35 in Richtung der Fahrzeugslängsmittelebene verlagert wird. Diese Verlagerung der Schwenkachse 35 erfolgt solange, bis das Riegelorgan 12 eine im wesentlichen senkrechte Lage einnimmt (Fig. 13). In dieser Schwenkstellung kann nun das Verdeck ohne Kollision mit dem Windschutzscheibenrahmen 3 in eine Öffnungsstellung gemäß Pfeil 41 angehoben werden. Zwischen Riegelorganen 12 und Windschutzscheibenrahmen 3 ist dabei ein hinreichender Bewegungsspalt S gebildet, so daß ungewollte Bauteilkontakte sicher vermieden sind.

Nach dem Abheben des Verdecks kann bei Freigabe des Schwenkgriffs 5 durch die Bedienperson die vorbeschriebene Rückschwenkung der Baugruppen erfolgen, wobei die Federwirkung zwischen den beim Öffnungsvorgang verlagerten Teilen 7, 15 des Torsionsstabes T und die im Bereich der Rückholfeder 36 erzeugte Vorspannung gleichzeitig so wirksam sind, daß der Schwenkgriff 5 selbsttätig wieder in Richtung des Dachspitzenteils 2 zurückgeschwenkt (entgegen der Bewegungsfolge gemäß Fig. 2 bis 7) und das Riegelorgan 12 ebenfalls in eine etwa parallele Lage relativ zum Dachspitzenteil 2 eingeschwenkt (Fig. 2) wird. Damit ist eine Verwahrstellung der Bauteile der Schließvorrichtung 1 erreicht, und das Verdeck kann insgesamt in eine nicht näher dargestellte Öffnungsstellung im Heckbereich des Fahrzeugs verlagert werden, ohne daß hervorstehende Verdeck-Teile im Bereich der Schließvorrichtung 1 eine Gefährdung für die Bedienperson verursachen.

Für die vorbeschriebene Bewegungsfolge ist das Riegelorgan 12 in zweckmäßiger Ausführung mit einem Riegelhaken 42 und einem diesen abstützenden Tragkörper 43 zweiteilig ausgeführt, wobei an diesem Tragkörper 43 der an der Gegenkontur der Dachspitze 2 anlegbare Stützansatz 38 vorzugsweise einstückig angeformt ist. Der Riegelhaken 42 des Riegelorgans 12 ist in einer Aufnahmenut 44 verschiebbar am Tragkörper 43 festgelegt, so daß mit geringem Aufwand durch eine Verstellung mittels einer Einstellschraube 46 eine optimale Anpassung des Riegelhakens 42 bzw. des Riegelorgans 12 an das Gegenlager 11 im Bereich des Windschutzscheibenrahmens 3 möglich ist. Der Riegelhaken 42 kann in einer Pfeilrichtung N so eingestellt werden (Fig. 11), daß in der Schließstellung eine optimale Spannstellung des Riegelorgans 12 und damit eine zuverlässig dichte Anlage des Dachspitzenteils 2 im Bereich eines Dichtungsprofils 47 am Windschutzscheibenrahmen 3 erreicht sind.

## Patentansprüche

1. Schließvorrichtung für ein Verdeck eines Cabriolet-Fahrzeuges, mit einem am Dachspitzenteil (2) in der Fahrzeuglängsmittelebene (4) abgestützten Einhand-Schwenkgriff (5), an dem eine symmetrisch zur Fahrzeuglängsmittelebene (4) verlaufende und eine Schwenkbewegung (C) übertragende Verbindungsstange (9) vorgesehen ist, deren Endteile (7) mit jeweiligen in Schließstellung des Verdecks in Gegenlager (11) am Windschutzscheibenrahmen (3) eingreifenden Riegelorganen (12) versehen sind, die ihrerseits jeweils schwenkbar von einem Haltekörper (13) geführt sind, **dadurch gekennzeichnet, daß** die Verbindungsstange (9) als ein gemeinsam mit dem Schwenkgriff (5) um dessen Schwenklager (14) am Dachspitzenteil (2) verlagerbarer Torsionsstab (T) ausgebildet ist und dessen Endteile (7) jeweils im Bereich der Riegelorgane (12) ortsfest am Dachspitzenteil (2) gelagert sind.

2. Schließvorrichtung nach Anspruch 1, **dadurch gekennzeichnet, daß** der Torsionsstab (T) ausgehend von seinem drehfest am Schwenkgriff (5) festgelegten Mittelteil (15) in Längsrichtung zu den Riegelorganen (12) hin jeweils einen Bogenprofilteil (16) aufweist, an diesen der zum Mittelteil (15) parallel versetzt verlaufende Endteil (7) anschließt und dieser seinerseits zum Riegelorgan (12) hin mit zumindest einem Gleitlager (17, 18) die ortsfeste Abstützung bildet.

3. Schließvorrichtung nach Anspruch 1 oder 2, **dadurch gekennzeichnet, daß** der Torsionsstab (T) eine bei Offenstellung des Verdecks sowohl das jeweilige Riegelorgan (12) im Bereich des Haltekörpers (13) als auch den mittleren Schwenkgriff (5) selbsttätig in eine Verwahrstellung zum Dachspitzenteil (2) hin zurückführende Zwangsführung bildet.

4. Schließvorrichtung nach einem der Ansprüche 1 bis 3, **dadurch gekennzeichnet, daß** das Schwenklager (14) des Schwenkgriffs (5) eine in Schließstellung des Verdecks in Richtung der Fahrzeuglängsmittelebene (4) vor dem Betätigungsbereich (6) des Schwenkgriffes (5) liegende Schwenkachse (19) aufweist und parallel vor dieser der Torsionsstab (T) durch eine vom Mittelteil (15) gebildete Verbindungsachse (20) mit dem Schwenkgriff (5) verbunden ist.

5. Schließvorrichtung nach einem der Ansprüche 1 bis 4, **dadurch gekennzeichnet, daß** der Schwenkgriff (5) einen zu dessen Schwenkachse (19) hin verlaufenden ersten Hebelteil (H) definiert, der andererseits mit einem den Mittelteil (15) des Torsionsstabes (T) im Bereich der Verbindungsachse (20) erfassenden zweiten Hebelteil (H') zusammenwirkt.

6. Schließvorrichtung nach einem der Ansprüche 1 bis 5, **dadurch gekennzeichnet, daß** der Torsionsstab (T) im Bereich seiner mittleren Verbindungsachse (20) bei der Öffnungsbewegung des Schwenkgriffes (5) oberhalb dessen Schwenklagers (14) verschwenkbar ist.

7. Schließvorrichtung nach einem der Ansprüche 1 bis 6, **dadurch gekennzeichnet, daß** der Schwenkgriff (5) und die Riegelorgane (12) in Schließstellung des Verdecks eine verriegelbare Totpunktstellung einnehmen.

8. Schließvorrichtung nach einem der Ansprüche 1 bis 7, **dadurch gekennzeichnet, daß** am Schwenkgriff (5) ein durch Fingerdruck entriegelbarer Verriegelungshaken (23) schwenkbar gelagert ist.

9. Schließvorrichtung nach Anspruch 8, **dadurch gekennzeichnet, daß** der Verriegelungshaken (23) einerseits einen in eine Rastkerbe (28) am Schwenkgriff (5) verlagerbaren Druckschenkel (25) aufweist und andererseits ein am Dachspitzenteil (2) ein Gegenlager (30) hintergreifender Hakenteil (29) vorgesehen ist.

10. Schließvorrichtung nach einem der Ansprüche 1 bis 9, **dadurch gekennzeichnet, daß** der Torsionsstab (T) im Bereich des jeweiligen Endteils (7) mit zwei im Abstand (B) angeordneten Gleitlagern (17, 18) zusammenwirkt und zwischen diesen der jeweilige Haltekörper (13) mit dem Riegelorgan (12) vorgesehen ist.

11. Schließvorrichtung nach einem der Ansprüche 1 bis 9, **dadurch gekennzeichnet, daß** der Haltekörper (13) für das Riegelorgan (12) jeweils als ein U-Profilteil ausgebildet ist, das im Bereich einer vom Endteil (7) des Torsionsstabes (T) definierten Querachse (32) durch zwei parallele Schenkelteile (33, 34) zu den Gleitlagern (17, 18) hin abgestützt ist, wobei im Abstand zu dieser Querachse (32) zwischen den beiden Schenkelteilen (33, 34) des U-Profilteils eine das Riegelorgan (12) abstützende Schwenkachse (35) verläuft.

12. Schließvorrichtung nach einem der Ansprüche 1 bis 11, **dadurch gekennzeichnet, daß** das Riegelorgan (12) im Bereich seiner Schwenkachse (35) mit einer am Haltekörper (13) festgelegten Rückholfeder (36) verbunden ist.

13. Schließvorrichtung nach einem der Ansprüche 1 bis 12, **dadurch gekennzeichnet, daß** das Riegelorgan (12) mit einem Riegelhaken (42) und einem diesen abstützenden Tragkörper (43) zweiteilig ausgebildet ist, der anderenends einen an einem Gegenlager (39) des Dachspitzenteils (2) anlegbaren Stützansatz (38) aufweist.

14. Schließvorrichtung nach Anspruch 13, **dadurch gekennzeichnet, daß** der rückseitig am Tragkörper (43) vorgesehene Stützansatz (38) an einer ebenen Gegenkontur (39') des Dachspitzenteils (2) nach Art einer Kulissenführung abgestützt ist.

15. Schließvorrichtung nach Anspruch 13 oder 14, **dadurch gekennzeichnet, daß** der Riegelhaken (42) des Riegelorgans (12) in einer Aufnahmenut (44) verschiebbar am Tragkörper (43) festgelegt ist.

## Revendications

1. Dispositif de fermeture pour une capote d'un véhicule décapotable, comprenant une poignée pivotante à une main (5) appuyée contre l'élément en pointe du toit (2) dans le plan médian longitudinal du véhicule (4) et sur laquelle est prévue une barre de liaison (9) s'étendant symétriquement par rapport au plan médian longitudinal du véhicule (4) et transmettant un mouvement de pivotement (C), les extrémités (7) de la barre étant munies d'organes de verrou (12) qui s'engagent, dans la position de fermeture de la capote, à chaque fois dans des contre-paliers (11) prévus sur le cadre du pare-brise (3) et qui sont, de leurs côtés, dirigés à chaque fois de manière pivotante par un corps de maintien (13),
**caractérisé en ce que**
la barre de liaison (9) est réalisée sous la forme d'une barre de torsion (T) qui peut être déplacée conjointement avec la poignée pivotante (5) autour de son palier pivotant (14) au niveau de l'élément en pointe du toit (2) et dont les extrémités (7) sont à chaque fois fixées à demeure sur l'élément en pointe du toit (2) au niveau des organes de verrou (12).

2. Dispositif de fermeture selon la revendication 1,
**caractérisé en ce que**
la barre de torsion (T) présente à chaque fois un élément de profilé en arc (16) partant de son élément central (15) fixé solidaire en rotation sur la poignée pivotante (5) dans la direction longitudinale vers les organes de verrou (12), et l'extrémité (7) s'étendant de manière décalée parallèlement à l'élément central (15) est raccordée à cet élément de profilé en arc et forme, de son côté, l'appui fixe par rapport à l'organe de verrou (12) avec au moins un palier lisse (17, 18).

3. Dispositif de fermeture selon la revendication 1 ou 2,
**caractérisé en ce que**
la barre de torsion (T) forme, dans la position ouverte de la capote, un guidage forcé qui redirige automatiquement dans une position élevée par rapport à l'élément en pointe du toit (2) aussi bien l'organe de verrou respectif (12) au niveau du corps de maintien (13) que la poignée pivotante centrale (5).

4. Dispositif de fermeture selon l'une des revendications 1 à 3,
**caractérisé en ce que**
le palier pivotant (14) de la poignée pivotante (5) présente un axe de pivotement (19) situé, dans la position de fermeture de la capote, en direction du plan médian longitudinal du véhicule (4), devant la zone d'actionnement (6) de la poignée pivotante (5) et, parallèlement devant celle-ci, la barre de torsion (T) est reliée à la poignée pivotante (5) par un axe de liaison (20) formé par l'élément central (15).

5. Dispositif de fermeture selon l'une des revendications 1 à 4,
**caractérisé en ce que**
la poignée pivotante (5) définit un premier élément de levier (H) s'étendant par rapport à son axe de pivotement (19) et qui coopère par ailleurs avec un deuxième élément de levier (H') saisissant l'élément central (15) de la barre de torsion (T) au niveau de l'axe de liaison (20).

6. Dispositif de fermeture selon l'une des revendications 1 à 5,
**caractérisé en ce que**
la barre de torsion (T) peut pivoter au niveau de son axe de liaison central (20), dans le cas du mouvement d'ouverture de la poignée pivotante (5), au-dessus de son palier pivotant (14).

7. Dispositif de fermeture selon l'une des revendications 1 à 6,
**caractérisé en ce que**
la poignée pivotante (5) et les organes de verrou (12) prennent une position de point mort verrouillable dans la position de fermeture de la capote.

8. Dispositif de fermeture selon l'une des revendications 1 à 7,
**caractérisé en ce qu'**
un crochet de verrouillage (23), déverrouillable par une pression de doigt, est monté de manière à pouvoir pivoter sur la poignée pivotante (5).

9. Dispositif de fermeture selon la revendication 8,
**caractérisé en ce que**
le crochet de verrouillage (23) présente d'un côté une branche de pression (25) qui peut être déplacée dans une encoche d'encliquetage (28) au niveau de la poignée pivotante (5) et de l'autre côté il est prévu un élément de crochet (29) s'engageant derrière un contre-palier (30) au niveau de l'élément en pointe du toit (2).

10. Dispositif de fermeture selon l'une des revendications 1 à 9,
**caractérisé en ce que**
la barre de torsion (T) coopère, au niveau de l'élément d'extrémité (7) respectif, avec deux paliers lisses (17, 18), disposés à distance (B) et le corps de maintien (13) respectif est prévu entre ceux-ci avec l'organe de verrou (12).

11. Dispositif de fermeture selon l'une des revendications 1 à 9,
**caractérisé en ce que**
le corps de maintien (13) pour l'organe de verrou (12) est chaque fois un profilé en forme de U qui est appuyé, au niveau d'un axe transversal (32) défini par l'extrémité (7) de la barre de torsion (T), par deux branches parallèles (33, 34) par rapport aux paliers lisses (17, 18), et un axe de pivotement (35) supportant l'organe de verrou (12) s'étend à distance de cet axe transversal (32) entre les deux branches (33, 34) du profilé en U.

12. Dispositif de fermeture selon l'une des revendications 1 à 11,
**caractérisé en ce que**
l'organe de verrou (12), au niveau de son axe de pivotement (35), est relié à un ressort de rappel (36) fixé sur le corps de maintien (13).

13. Dispositif de fermeture selon l'une des revendications 1 à 12,
**caractérisé en ce que**
l'organe de verrou (12) est réalisé en deux parties comportant un crochet de verrou (42) et un corps de support (43) supportant celui-ci qui présente, à l'autre extrémité une pièce d'appui (38) pouvant être montée sur un contre-palier (39) de l'élément en pointe du toit (2).

14. Dispositif de fermeture selon la revendication 13,
**caractérisé en ce que**
la pièce d'appui (38) prévue sur la face arrière du corps de support (43) est appuyée sur un contre-contour plat (39') de l'élément en pointe du toit (2) sous la forme d'un guidage coulissant.

15. Dispositif de fermeture selon la revendication 13 ou 14,
**caractérisé en ce que**
le crochet de verrou (42) de l'organe de verrou (12) est fixé au corps de support (43) de manière à pouvoir être déplacé dans une rainure de réception (44).

## Claims

1. Locking arrangement for a convertible vehicle folding top, having a one-hand pivoting handle (5) which is supported at the tip part (2) of the folding top in the longitudinal centre-plane (4) of the vehicle and at which is provided a connecting rod (9) which extends symmetrically to the longitudinal centre-plane (4) of the vehicle, which transmits a pivoting movement (C), and whose end portions (7) are provided with respective catch members (12) which, when the folding top is in the raised position, engage in abutments (11) on the windscreen frame (3), the catch members (12) themselves being pivotably guided by respective holding members (13), **characterised in that** the connecting rod (9) is in the form of a torsion bar (T) which can be displaced on the tip part (2) of the folding top, jointly with the pivoting handle (5), about the latter's pivot mounting (14) and whose end portions (7) are each mounted in a fixed position on the tip-part (2) of the folding top, in the region of the catch members (12).

2. Locking arrangement according to claim 1, **characterised in that**, starting from its central portion (15), which is fixed to the pivoting handle (5) in such a way as to be solid in rotation therewith, the torsion bar (T) has, in the longitudinal direction towards each catch member (12), a portion (16) of a curved profile, and the end portion (7), which extends in parallel to but at an offset from the central portion (15), connects up with the said portion (16) of curved profile and in turn forms, towards the catch member (12) and with at least one plain bearing (17, 18), the fixed support.

3. Locking arrangement according to claim 1 or 2, **characterised in that** the torsion bar (T) forms a means of forced guidance which, when the folding top is in the lowered position, returns both the individual catch members (12), in the region of the holding members (13), and the central handle (5) automatically to a stored position towards the tip-part (2) of the folding top.

4. Locking arrangement according to one of claims 1 to 3, **characterised in that** the pivot mounting (14) of the pivoting handle (5) has an axis of pivot (19) which, when the folding top is in the raised position, is situated in front of the actuating region (6) of the pivoting handle (5) in the longitudinal centre plane of the vehicle, and parallel to and in front of the said axis of pivot (19), the torsion bar (T) is connected to the pivoting handle (5) by a connecting shaft (20) which is formed by the central portion (15).

5. Locking arrangement according to one of claims 1 to 4, **characterised in that** the pivoting handle (5) defines a first lever arm (H) which extends to the axis of pivot (19) of the pivoting handle (5) and which co-operates on the other hand with a second lever arm (H') which grasps the torsion bar (T) in the region of the connecting shaft (20).

6. Locking arrangement according to one of claims 1 to 5, **characterised in that**, in the region of its central connecting shaft (20), the torsion bar (T) can be pivoted above the pivot mounting (14) of the pivoting handle (5) in the course of the latter's opening movement.

7. Locking arrangement according to one of claims 1 to 6, **characterised in that**, when the folding top is in the raised position, the pivoting handle (5) and the catch members (12) assume a lockable dead-centre position.

8. Locking arrangement according to one of claims 1 to 7, **characterised in that** a locking hook (23) which can be unlocked by finger pressure is pivotably mounted on the pivoting handle (5).

9. Locking arrangement according to claim 8, **characterised in that** on the one hand the locking hook (23) has a pressable arm (25) which can be displaced into a latching notch in the pivoting handle (5) and on the other hand a hook portion (29) is provided which hooks behind an abutment (30) on the tip-part (2) of the folding top.

10. Locking arrangement according to one of claims 1 to 9, **characterised in that**, in the region of each end portion (7), the torsion bar (T) co-operates with two plain bearings (17, 18) which are arranged at a distance (B), and the holding members (13) having the catch members (12) are provided between the said slide bearings (17, 18) in the respective cases.

11. Locking arrangement according to one of claims 1 to 9, **characterised in that** the holding member (13) for the catch member (12) is in each case in the form of a part of U-shaped profile which, in the region of a transverse axis (32) defined by the end portion (7) of the torsion bar (T), is supported towards the plain bearings (17, 18) by two parallel side-parts (33, 34), a pivot shaft (35) which supports the catch member (12) extending between the two side-parts (33, 34) of the part of U-shaped profile at a distance from the said transverse axis (32).

12. Locking arrangement according to one of claims 1 to 11, **characterised in that** the catch member (12) is connected, in the region of its pivot shaft (35), to a return spring (36) fixed to the holding member (13).

13. Locking arrangement according to one of claims 1 to 12, **characterised in that** the catch member (12) is formed in two parts as a catch hook (42) and a carrier body (43) which supports the latter and which has, at the other end, a supporting projection (38) which can be brought to bear against an abutment (39) on the tip-part (2) of the folding top.

14. Locking arrangement according to claim 13, **characterised in that** the supporting projection (38), which is provided at the rear of the carrier body (43), is supported on a plane mating contour (39') on the tip-part (2) of the folding top after the fashion of a guided slider.

15. Locking arrangement according to claim 13 or 14, **characterised in that** the catch hook (42) of the catch member (12) is displaceably secured to the carrier body (43) in a receiving groove (44).
